# EUROPÄISCHE PATENTANMELDUNG

(11) **EP 1 275 782 A2**
(43) Veröffentlichungstag der Anmeldung: **15.01.2003**
(21) Anmeldenummer: 02450151.2
(22) Anmeldetag: 04.07.2002
(51) Int. Cl.: E01C 11/22, A01G 1/08

(54) **Randstein**

(30) Priorität: 09.07.2001 AT 10642001
(71) Anmelder: Götzinger, Gernot, 2013 Göllersdorf (AT)
(72) Erfinder: Götzinger, Gernot, 2013 Göllersdorf (AT)
(74) Vertreter: Gibler, Ferdinand, Dipl.Ing. Dr. techn.

(57) **Zusammenfassung**

Randstein aus Beton für eine Einfassung mit einem Leistenelement, wobei der Randstein ein keilförmiges Einschlagelement (1) umfaßt, und wobei das keilförmige Einschlagelement (1) einstückig mit dem Leistenelement (2) verbunden ist.

## Beschreibung

Die Erfindung betrifft einen Randstein aus Beton für eine Einfassung mit einem Leistenelement.

Bekannte derartige Randsteine werden insbesondere für Beeteinfassungen, Einfassungen von Baumscheiben, Wegeinfassungen oder Einfassungen von Pflasterungen verwendet. Dabei werden die Randsteine in ein nasses Zementbett, Betonbett od. dgl. gesetzt und auf diese Weise miteinander und mit dem Untergrund einstückig verbunden. Nachteilig an diesen bekannten Randsteinen ist, daß die Errichtung einer Einfassung arbeitsaufwendig ist und ein späteres Verändern der Einfassung, z.B. bei einer Beetvergrößerung oder -verkleinerung nur mit erheblichem Aufwand durchgeführt werden kann, da die Randsteine aus dem Zementbett, Betonbett od. dgl. gelöst werden müssen, wobei es leicht zu einer Beschädigung der Randsteine kommen kann. Werden die Randsteine trocken versetzt, so weisen sie im Untergrund nur einen geringen Halt auf, weshalb sie bereits bei geringen Belastungen zum Kippen bzw. Verschieben neigen.

Andere bekannte Randsteine sind als einseitig angespitzte Holzpflöcke ausgebildet, wobei jeder Randstein bei der Errichtung einer Einfassung einzeln in den Untergrund eingeschlagen wird. Nachteilig an diesen Randsteinen ist, daß es bei der Errichtung einer Einfassung aufgrund der Form der Randsteine leicht zu einer Versetzung beim Einschlagen der Randsteine kommen kann, wodurch die Einfassung unansehnlich wird. Weiters weisen diese Randsteine den Nachteil auf, daß das Holz morsch wird, wodurch die Einfassung instabil und unansehnlich wird.

Weiters sind Randsteine aus Kunststoff bekannt. Diese weisen den Nachteil auf, daß der Kunststoff aufgrund von Witterungseinflüsse rasch altert, wodurch Einfassungen aus solchen Randsteinen ebenfalls instabil und unansehnlich werden.

Aufgabe der Erfindung ist es daher, einen Randstein der eingangs genannten Art anzugeben, mit dem eine langlebige und stabile Einfassung errichtet werden kann und der direkt im Untergrund ohne Zementbett, Betonbett od. dgl. verankert werden kann

Erfindungsgemäß wird dies dadurch erreicht, daß der Randstein ein keilförmiges Einschlagelement umfaßt, und daß das keilförmige Einschlagelement einstückig mit dem Leistenelement verbunden ist.

Dadurch ergibt sich der Vorteil, daß die Randsteine bei der Errichtung einer Einfassung trocken verlegt werden können, also nicht in ein Zementbett, Betonbett od. dgl. eingegossen werden müssen, und bei einer Veränderung der Einfassung ohne Beschädigung aus dem Untergrund entfernt werden können und an einer anderen Stelle eine neue Einfassung errichtet werden kann. Weiters ist vorteilhaft, daß bei einer Entfernung einer Einfassung aus den erfindungsgemäßen Randsteinen keine Rückstände eines Zementbettes, Betonbettes od. dgl. im Untergrund verbleiben können.

In Weiterbildung der Erfindung kann vorgesehen sein, daß das keilförmige Einschlagelement an zumindest einer Längsseite wenigstens ein Widerhakenelement aufweist. Durch das wenigstens eine Widerhakenelement wird nach Verfestigung des Untergrundes eine besonders stabile und dauerhafte Verbindung zwischen dem erfindungsgemäßen Randstein und dem Untergrund erreicht.

Gemäß einer anderen Ausführungsform kann vorgesehen sein, daß an einer ersten Stirnseite des Leistenelementes eine nutartige Vertiefung und an der gegenüberliegenden zweiten Stirnseite des Leistenelementes eine gegengleiche federartige Erhebung vorgesehen ist. Diese Ausführung ermöglicht es, daß aneinander angrenzende erfindungsgemäße Randsteine einer Einfassung in der Art eines Nut-Feder-Systems ineinander greifen und sich gegenseitig abstützen, wodurch die Stabilität einer Einfassung aus erfindungsgemäßen Randsteinen erhöht wird.

In weiterer Ausgestaltung der Erfindung kann vorgesehen sein, daß die dem freien Ende des keilförmigen Einschlagelementes gegenüberliegende Seite des Leistenelementes abgerundet ausgebildet ist. Durch die abgerundete Ausbildung werden Kanten an der Oberseite einer Einfassung aus erfindungsgemäßen Randsteinen vermieden, wodurch die Verletzungsgefahr bei einem Sturz auf die Einfassung verringert wird.

Eine andere mögliche Ausführungsform kann darin bestehen, daß an einer ersten Längsseite des Leistenelementes ein Ansatzelement seitlich angeformt ist, welches im eingesetzten Zustand eine Rasenmäherkante ausbildet, wobei sich vorzugsweise die Wandstärke des Ansatzelementes in Richtung des freien Endes des keilförmigen Einschlagelementes verjüngt.

Die Ausbildung einer Rasenmäherkante gewährleistet, daß zwischen einem Rasen, einer Wiese od. dgl. und dem erfindungsgemäßen Randstein ein Abstand ausgebildet ist, wodurch ein einfaches und schnelles maschinelles Mähen des Rasens, der Wiese od. dgl. ermöglicht wird.

Gemäß einer weiteren Ausführungsform der Erfindung kann vorgesehen sein, daß eine Stirnseite des Ansatzelementes mit der ersten Längsseite des Leistenelementes einen Winkel einschließt, der kleiner als 90° ist. Diese Ausführungsform ermöglicht es, daß bei der Errichtung einer Einfassung aus erfindungsgemäßen Randsteinen zwei angrenzende Randsteine so aneinandergefügt werden können, daß sich ein konkaver, ein konvexer oder eine gerader Abschnitt der Einfassung ergibt.

In Weiterführung der Erfindung kann vorgesehen sein, daß das keilförmige Einschlagelement einstückig mit dem Ansatzelement verbunden ist, und daß das Ansatzelement einstückig mit dem Leistenelement verbunden ist, wobei sich vorzugsweise die Wandstärke des Leistenelementes in Richtung des freien Endes des keilförmigen Einschlagelementes verjüngt. Wird der erfindungsgemäße Randstein bei der Herstellung oder der Lagerung auf eine Stirnseite gestellt, so weist diese Ausführungsform eine im wesentlichen z-förmige Standfläche auf, die eine gute Sicherheit gegen das Umkippen des Randsteines bieten.

Die Erfindung wird unter Bezugnahme auf die beigeschlossenen Zeichnungen, in welchen Ausführungsformen dargestellt sind, näher beschrieben. Dabei zeigt:
Fig.1 den Aufriß einer Ausführungsform eines erfindungsgemäßen Randsteins;
Fig.2 den Grundriß des Randsteins gemäß Fig. 1;
Fig.3 den Kreuzriß des Randsteins gemäß Fig. 1;
Fig. 4 den Aufriß einer anderen Ausführungsform eines erfindungsgemäßen Randsteins;
Fig. 5 den Grundriß des Randsteins gemäß Fig. 4;
Fig. 6 den Kreuzriß des Randsteins gemäß Fig. 4;
Fig. 7 den Aufriß einer weiteren Ausführungsform eines erfindungsgemäßen Randsteins;
Fig. 8 den Grundriß des Randsteins gemäß Fig. 7, und
Fig. 9 den Kreuzriß des Randsteins gemäß Fig. 7.

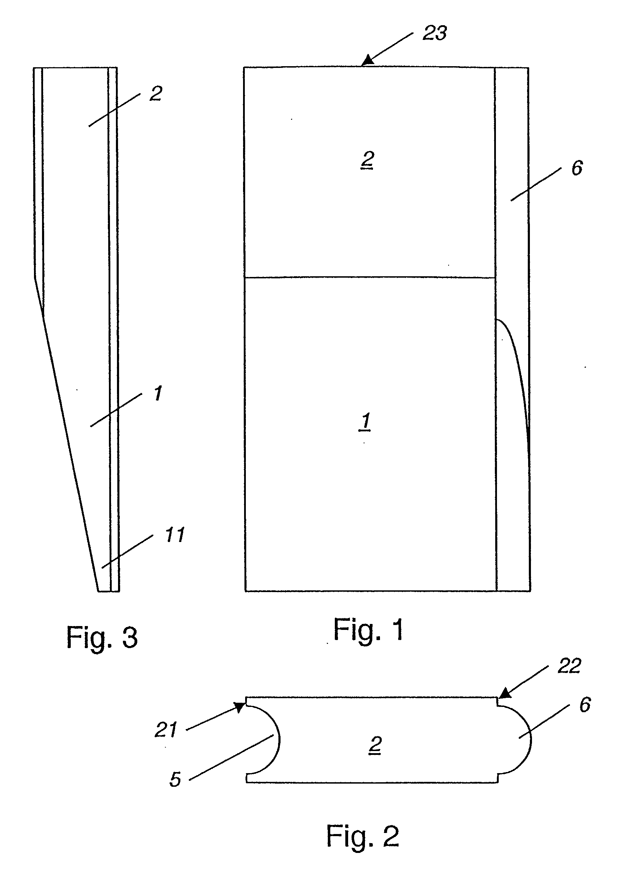

In den Fig. 1 bis 3 sind der Aufriß, der Grundriß und ein Kreuzriß einer Ausführungsform eines erfindungsgemäßen Randsteins aus Beton für eine Einfassung mit einem Leistenelement 2 dargestellt. Dabei umfaßt der Randstein ein keilförmiges Einschlagelement 1, welches einstückig mit dem Leistenelement 2 verbunden ist. Die kompakte Bauweise des erfindungsgemäßen Randsteins ermöglicht es, eine hinreichende Stabilität ohne Metallgerüst im Innern des Randsteins zu erreichen.

Der erfindungsgemäße Randstein kann durch das Aufbringen einer Kraft auf die dem freien Ende 11 des keilförmigen Einschlagelementes 1 gegenüberliegende Seite 23 des Leistenelementes 2 in den Untergrund getrieben und/oder eingeschlagen werden. Um den erfindungsgemäßen Randstein bereits mit einer geringen Kraft in den Untergrund einschlagen zu können, scheint es vorteilhaft zu sein, wenn der Untergrund vor dem Einschlagen des erfindungsgemäßen Randsteines gegebenenfalls aufgelockert wird. Die Auflockerung des

Untergrundes kann beispielsweise mittels einer Fräse durchgeführt werden.

Bei der Errichtung einer Einfassung werden die erfindungsgemäßen Randsteine vorzugsweise stirnseitig aneinandergefügt. Beim Überqueren der errichteten Einfassung, z.B. mit einer Scheibtruhe wird einer der erfindungsgemäßen Randsteine seitlich belastet. Um ein Ausknicken des belasteten Randsteines zu verhindern ist es wünschenswert, wenn er sich außer im Untergrund auch an den angrenzenden Randsteinen der Einfassung abstützen kann. Dies kann erreicht werden, wenn an einer ersten Stirnseite 21 des Leistenelementes 2 eine nutartige Vertiefung 5 und an der gegenüberliegenden zweiten Stirnseite 22 des Leistenelementes 2 eine gegengleiche federartige Erhebung 6 vorgesehen ist. Dadurch können die Randsteine bei der Errichtung einer Einfassung in der Art eines Nut-Feder-Systems miteinander lösbar verbunden werden, sodaß sich die Randsteine der Einfassung an den angrenzenden Randsteinen abstützen können. Nut und Feder können rund, oval, eckig od. dgl. ausgebildet sein.

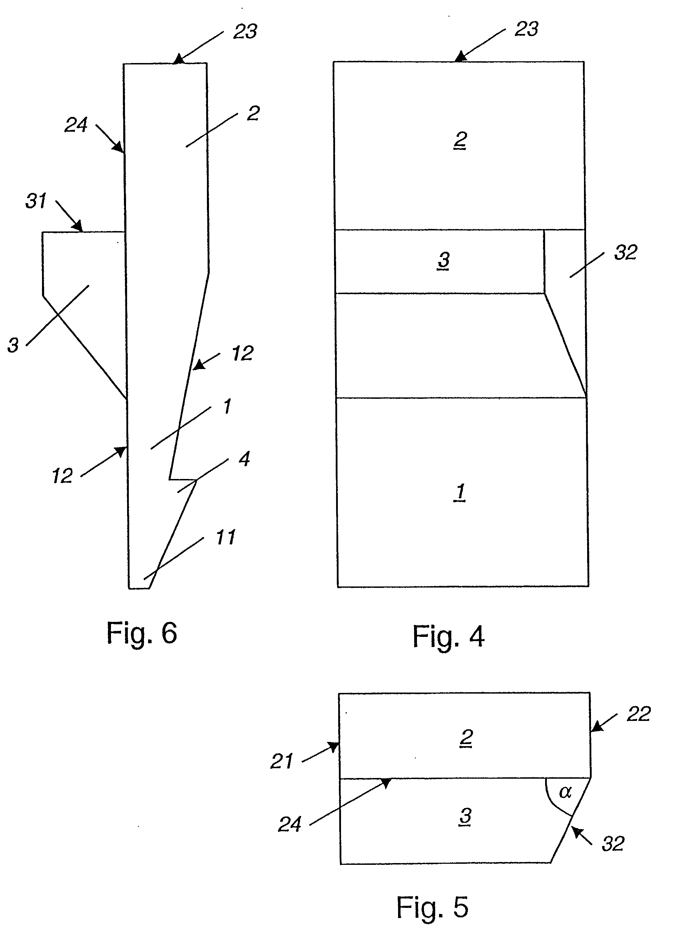

In den Fig. 4 bis 6 sind der Aufriß, der Grundriß und ein Kreuzriß einer anderen Ausführungsform des erfindungsgemäßen Randsteines gezeigt. Gemäß Fig. 6 weist das keilförmige Einschlagelement 1 an einer Längsseite 12 ein Widerhakenelement 4 auf. Dieses bewirkt, daß nach Verfestigung des Untergrundes der Halt des Randsteines im Untergrund verbessert wird, wodurch die Stabilität einer Einfassung erhöht wird. Es können auch mehrere der Widerhakenelemente 4 an einer der Längsseiten 12 des keilförmigen Einschlagelementes 1 vorgesehen sein. Bei einer andere Ausführungsform des erfindungsgemäßen Randsteins sind an beiden Längsseiten 12 des keilförmigen Einschlagelementes 1 Widerhakenelemente 4 vorgesehen.

Gemäß Fig. 6 ist an einer ersten Längsseite 24 des Leistenelementes 2 seitlich ein Ansatzelement 3 angeformt, welches im eingesetzten Zustand des Randsteines eine Rasenmäherkante 31 ausbildet. Die Wandstärke des Ansatzelementes 3 verjüngt sich in Richtung des freien Endes 11 des keilförmigen Einschlagelementes 1. Das Ansatzelement gewährleistet, daß zwischen dem Randstein und einem Rasen ein Abstand ausgebildet ist, der frei von Gras ist. Dadurch kann auf einfache Weise maschinell der Rasen gemäht werden, ohne daß am Rand hohes Gras stehen bleibt. Beim Mähen kann sich gegebenenfalls ein oder mehrere Räder eines Rasenmähers auf der Rasenmäherkante 31 abstützen. Der sich verjüngende Abschnitt des Ansatzelementes 3 gewährleistet, daß der erfindungsgemäße Randstein bis zur Rasenmäherkante 31 in den Untergrund eingeschlagen werden kann und nicht nur bis zu einer sprunghaften Dickenänderung des Randsteines aufgrund des Ansatzelementes 3.

Wie in Fig. 5 gezeigt, schließt eine Stirnseite 32 des Ansatzelementes 3 mit der ersten Längsseite 24 des Leistenelementes 2 einen Winkel α ein, der kleiner als 90° ist. Aufgrund der schrägen Ausführung der Stirnseite 32 können die erfindungsgemäßen Randsteine bei einem gekrümmten Abschnitt einer Einfassung, bei der die Ansatzelemente 3 auf der konkaven Seite der Einfassung zu liegen kommen, stirnseitig unter Ausbildung eines nur geringen Spaltes aneinandergefügt werden. Für Einfassungen mit geraden Abschnitten können Ausführungsformen vorgesehen sein, bei denen der Winkel α gleich 90° ist und für gekrümmte Abschnitte, bei denen die Ansatzelemente 3 auf der konvexen Seite der Einfassung zu liegen kommen können weitere erfindungsgemäße Randsteine mit einem

Winkel α vorgesehen sein, der größer als 90° ist.

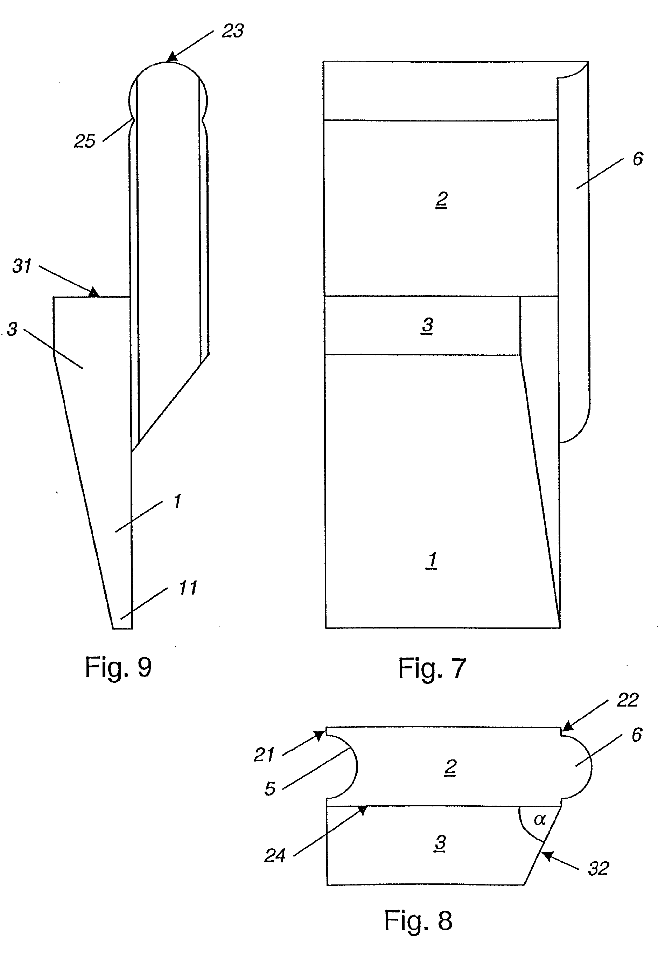

In den Fig. 7 bis 9 sind der Aufriß, der Grundriß und ein Kreuzriß einer weiteren Ausführungsform des erfindungsgemäßen Randsteines gezeigt. Bei dieser Ausführung ist das keilförmige Einschlagelement 1 einstückig mit dem Ansatzelement 3 und das Ansatzelement 3 einstückig mit dem Leistenelement 2 verbunden. Die Wandstärke des Leistenelementes 2 verjüngt sich in Richtung des freien Endes 11 des keilförmigen Einschlagelementes 1. Die kontinuierliche Dickenänderung gewährleistet eine gute Einschlagbarkeit des erfindungsgemäßen Randsteins. Die Ausführungsform nach den Fig. 7 bis 9 weist eine im wesentlichen z-förmige Gestalt auf, wodurch der erfindungsgemäße Randstein beim Abstellen auf die Stirnseite 21 zu Lagerungszwecken od. dgl. eine hohe Standfestigkeit aufweist.

Gemäß Fig. 9 ist die dem freien Ende 11 des keilförmigen Einschlagelementes 1 gegenüberliegende Seite 23 des Leistenelementes 2 abgerundet ausgebildet. Aufgrund der abgerundeten Form der Seite 23 weist eine Einfassung keine scharfen Kanten auf, wodurch die Verletzungsgefahr bei einem Sturz od. dgl. gesenkt wird. Der abgerundete Abschnitt kann durch eine Rille 25 vom restlichen Leistenelement 2 getrennt sein.

Aufgrund der Verbindung des keilförmigen Einschlagelementes 1 mit dem Ansatzelement 3 kann der erfindungsgemäße Randstein durch eine Krafteinleitung an der Rasenmäherkante 31 eingeschlagen werden, wodurch keine Beschädigung der abgerundet ausgebildeten Seite 23 durch den Einsetzvorgang auftreten kann.

Gemäß Fig. 8 schließt die Stirnseite 32 des Ansatzelementes 3 mit der ersten Längsseite 24 des Leistenelementes 2 einen Winkel α ein, der kleiner als 90° ist. Bei dieser Ausführung ergibt sich der weitere Vorteil, daß sich auch bei einer gekrümmten Einfassung die erfindungsgemäßen Randsteine in der Art eines Nut-Feder-Systems gegenseitig abstützen können.

## Patentansprüche

1. Randstein aus Beton für eine Einfassung mit einem Leistenelement, **dadurch gekennzeichnet, daß** der Randstein ein keilförmiges Einschlagelement (1) umfaßt, und daß das keilförmige Einschlagelement (1) einstückig mit dem Leistenelement (2) verbunden ist.

2. Randstein nach Anspruch 1, **dadurch gekennzeichnet, daß** das keilförmige Einschlagelement (1) an zumindest einer Längsseite (12) wenigstens ein Widerhakenelement (4) aufweist.

3. Randstein nach Anspruch 1 oder 2, **dadurch gekennzeichnet, daß** an einer ersten Stirnseite (21) des Leistenelementes (2) eine nutartige Vertiefung (5) und an der gegenüberliegenden zweiten Stirnseite (22) des Leistenelementes (2) eine gegengleiche federartige Erhebung (6) vorgesehen ist.

4. Randstein nach einem der Ansprüche 1 bis 3, **dadurch gekennzeichnet, daß** die dem freien Ende (11) des keilförmigen Einschlagelementes (1) gegenüberliegende Seite (23) des Leistenelementes (2) abgerundet ausgebildet ist.

5. Randstein nach einem der Ansprüche 1 bis 4, **dadurch gekennzeichnet, daß** an einer ersten Längsseite (24) des Leistenelementes (2) ein Ansatzelement (3) seitlich angeformt ist, welches im eingesetzten Zustand eine Rasenmäherkante (31) ausbildet, wobei sich vorzugsweise die Wandstärke des Ansatzelementes (3) in Richtung des freien Endes (11) des keilförmigen Einschlagelementes (1) verjüngt.

6. Randstein nach Anspruch 5, **dadurch gekennzeichnet, daß** eine Stirnseite (32) des Ansatzelementes (3) mit der ersten Längsseite (24) des Leistenelementes (2) einen Winkel (α) einschließt, der kleiner als 90° ist.

7. Randstein nach einem der Ansprüche 5 und 6, **dadurch gekennzeichnet, daß** das keilförmige Einschlagelement (1) einstückig mit dem Ansatzelement (3) verbunden ist, und daß das Ansatzelement (3) einstückig mit dem Leistenelement (2) verbunden ist, wobei sich vorzugsweise die Wandstärke des Leistenelementes (2) in Richtung des freien Endes (11) des keilförmigen Einschlagelementes (1) verjüngt.
